# EUROPÄISCHE PATENTANMELDUNG

(11) **EP 1 621 333 A1**
(43) Veröffentlichungstag der Anmeldung: **01.02.2006**
(21) Anmeldenummer: 04405405.4
(22) Anmeldetag: 01.07.2004
(51) Int. Cl.: B32B 37/12, B65D 1/28

(54) **Verfahren zur Herstellung eines Verpackungsmaterials**

(71) Anmelder: Alcan Technology & Management Ltd., 8212 Neuhausen am Rheinfall (CH)
(72) Erfinder: Nägeli, Hans-Rudolf, 8212 Neuhausen (CH); Hombach, Franz Peter, 8222 Beringen (CH); Benz, Patrick, 9400 Rorschach (CH)

(57) **Zusammenfassung**

Bei einem Verfahren zur Herstellung eines Verpackungsmaterials mit wenigstens zwei über wenigstens eine Klebstoffschicht (13) zu einem mehrschichtigen Laminat (10) verbundenen Filmen (14) oder Folien (12) bestehen die Klebstoffschichten aus einem Elektronenstrahl härtenden Klebstoff und das Laminat wird zum Aushärten des Klebstoffes mit Elektronen bestrahlt. Das Laminat eignet sich in besonderem Mass für die Fertigung von Behältern, insbesondere zur Verpackung von Nahrungsmitteln für Mensch und Tier. Die Laminatherstellung unter Verwendung Elektronenstrahl härtender Klebstoffe führt zu einer wesentlich verminderten Durchlaufzeit und zu einer Reduktion von Lösungsmittelemissionen beim Ersatz lösungsmittelbasierter Klebstoffe durch Elektronenstrahl härtende Klebstoffe.

## Beschreibung

Die Erfindung betrifft ein Verfahren zur Herstellung eines Verpackungsmaterials mit wenigstens zwei über wenigstens eine Klebstoffschicht zu einem mehrschichtigen Laminat verbundenen Filmen oder Folien, wobei die Klebstoffschicht/en ausgehärtet wird/werden. Im Rahmen der Erfindung liegt auch ein aus dem Laminat tiefgezogener Behälter.

Sterilisierbare Behälter auf Aluminiumbasis für Tiernahrungsmittel werden heute durch Laminieren einer gegebenenfalls lackierten Aluminiumfolie und eines cast Polypropylen (cPP)-Films mit einem hochwertigen, sterilisierbaren Polyurethan (PUR)- Klebstoff hergestellt. Das Laminat wird bis zum vollständigen Aushärten der Klebstoffschicht unter definierten Bedingungen gelagert. Die endgültige Struktur ist: cPP-Film / Klebstoffschicht / Aluminiumfolie. Nach dem abschliessenden Aushärten während mehreren Tagen kann das fertig gestellte Laminat zugeschnitten und an den Kunden verschickt werden. Die vom Auftragseingang bis zur Auslieferung des fertig konfektionierten Laminates benötigte Durchlaufzeit ist wesentlich von der Aushärtungsdauer der PUR-Klebstoffe abhängig.

Der Erfindung liegt die Aufgabe zugrunde, ein Verfahren der eingangs genannten Art bereitzustellen, mit welchem die Aushärtungsdauer der für die Laminierung benötigten Klebstoffe und damit die Durchlaufzeit gegenüber der herkömmlichen Laminatherstellung herabgesetzt werden kann.

Zur erfindungsgemässen Lösung der Aufgabe führt, dass wenigstens eine Klebstoffschicht aus einem Elektronenstrahl härtenden Klebstoff besteht und das Laminat zum Aushärten des Klebstoffes mit Elektronen bestrahlt wird.

Die Strahlenhärtung von Elektronenstrahl härtenden Klebstoffen erfolgt beim Durchlauf durch eine Bestrahlungsstation innerhalb von Sekundenbruchteilen, wobei die endgültige Haftfestigkeit ohne zusätzliche Aushärtungsdauer im wesentlichen erreicht ist, wenn das Laminates aus der Bestrahlungsstation austritt und aufgewickelt wird.

Der Vorteil einer Laminatherstellung unter Verwendung Elektronenstrahl härtender Klebstoffe liegt nicht nur in einer wesentlich verminderten Durchlaufzeit, sondern auch in einer Reduktion von Lösungsmittelemissionen, wenn lösungsmittelbasierte Klebstoffe durch Elektronenstrahl härtende Klebstoffe ersetzt werden können.

Ein bevorzugtes Laminat weist zwei Filme oder Folien und eine Klebstoffschicht aus einem Elektronenstrahl härtenden Klebstoff auf.

Ein bevorzugtes Laminat weist die folgende Struktur auf: Polyolefin-Film / Klebstoffschicht aus einem Elektronenstrahl härtenden Klebstoff / Aluminiumfolie.

Das Laminat kann auf der Aluminiumfolie zusätzlich Lackschichten und/oder Bedruckungen aufweisen. Bevorzugte Laminate mit zusätzlichen Lackschichten und/oder Bedruckungen sind:
- Polyolefin-Film / Klebstoffschicht aus einem Elektronenstrahl härtenden Klebstoff / Aluminiumfolie / Lackschicht, insbesondere goldfarbige Lackschicht, wobei die Lackschicht vorzugsweise aus einem Elektronenstrahl härtenden Lack aufgebaut ist und das Laminat zum Aushärten des Lackes mit Elektronen bestrahlt wird
- Polyolefin-Film / Klebstoffschicht aus einem Elektronenstrahl härtenden Klebstoff / Aluminiumfolie / Lackschicht, insbesondere goldfarbige Lackschicht / Bedruckung, wobei die Lackschicht und/oder die Bedruckung vorzugsweise aus einem Elektronenstrahl härtenden Lack bzw. Druckmittel besteht und das Laminat zum Aushärten des Lackes bzw. des Druckmittels mit Elektronen bestrahlt wird
- Polyolefin-Film / Klebstoffschicht aus einem Elektronenstrahl härtenden Klebstoff / Aluminiumfolie / Lackschicht / Bedruckung / Überzugslackschicht, wobei die Lackschichten und/oder die Bedruckung vorzugsweise aus einem Elektronenstrahl härtenden Lack bzw. Druckmittel bestehen und das Laminat zum Aushärten des Lackes bzw. des Druckmittels mit Elektronen bestrahlt wird.

Bevorzugte Polyolefin-Filme sind siegelfähige Filme aus Polyethylen (PE) oder Polypropylen (PP). Für sterilisierfähige oder kochfeste Anwendungen ist PP, insbesondere ein cast PP-Film, wegen seiner höheren thermischen Belastbarkeit zu bevorzugen.

Der Klebstoff auf Acrylatbasis kann Monomere, Oligomere oder Mischungen von Monomeren und Oligomeren als Basiseinheiten enthalten. Beispiele von Monomeren sind mono-, di und multifunktionale Acrylate, wie Phosphorsäureesteracrylate, Hydroxyacrylate, Carboxyacrylate, Aminoacrylate, Acrylsäure und Acrylamid. Beispiele von Oligomeren sind Epoxyacrylate, Urethanacrylate, Polyesteracrylate, Siliconacrylate und Silanacrylate. Die erwähnten Monomeren und Oligomeren sind entweder im Handel erhältlich oder können mit Routineverfahren hergestellt werden. Der hier verwendete Begriff "Acrylat" (oder "Acryl") umfasst auch "Methacrylat" (oder "Methacryl"), wobei die Acrylate bevorzugt sind.

Das erfindungsgemäss hergestellte Laminat eignet sich in besonderem Mass für die Fertigung tiefgezogener und sterilisierbarer Verpackungsbehälter zur Verpackung von Nahrungsmitteln für Mensch und Tier. Aus dem Laminat durch Tiefziehen hergestellte Verpackungsbehälter eignen sich insbesondere auch als Portionenpackung für Speisen, Packung für elektronische Komponenten und Batteriepackungen.

Weitere Vorteile, Merkmale und Einzelheiten ergeben sich aus der nachfolgenden Beschreibung bevorzugter Ausführungsbeispiele sowie anhand der Zeichnung; diese zeigt schematisch in
- Fig. 1 den Querschnitt durch eine laminierte Verpackungsfolie;
- Fig. 2 die Herstellung der Verpackungsfolie von Fig. 1.

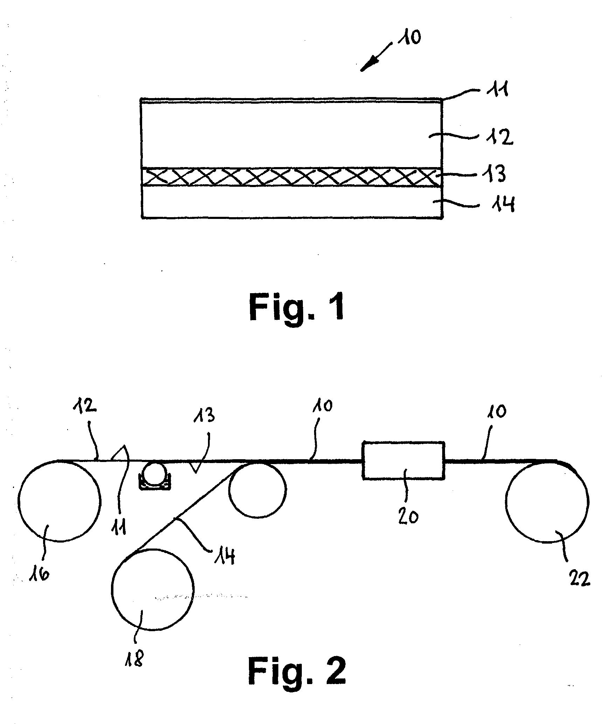

Eine in Fig. 1 gezeigte Verpackungsfolie 10 zur Herstellung tiefgezogener Verpackungsbehälter für Tiernahrung weist eine mit einer Goldlackierung 11 versehene Aluminiumfolie 12 als Aussenseite und einen siegelfähigen cPP-Film 14 als Innenseite auf. Die aussenseitige Aluminiumfolie 12 ist mit dem innenseitigen Siegelfilm 14 über eine Klebstoffschicht 13 aus einem Elektronenstrahl härtenden Klebstoff permanent verbunden. Bei einer typischen Verpackungsfolie 10 beträgt die Dicke der Alufolie beispielsweise etwa 60 µm, die Dicke des cPP-Films etwa 30 µm.

Fig. 2 zeigt die Herstellung einer Verpackungsfolie 10. Die goldlackierte Aluminiumfolie 12 wird als Band von einer ersten Wickelrolle 16 abgewickelt und auf der nicht mit dem Goldlack 11 versehenen Seite kontinuierlich mit Klebstoff 13 beschichtet. Von einer zweiten Wickelrolle 18 wird der Siegelfilm 14 als Band an die mit Klebstoff 13 beschichtete Aluminiumfolie 12 herangeführt und mit dieser kontinuierlich zur Verpackungsfolie 10 laminiert. Die Verpackungsfolie 10 durchläuft eine Bestrahlungsstation 20, in welcher die Klebstoffschicht 13 in einem Bruchteil einer Sekunde durch Elektronenstrahlhärtung aushärtet. Hierbei werden die Verfahrensparameter, d.h. die Hochspannung und die Strahlendosis, so eingestellt, dass eine zur Aushärtung des Klebstoffes ausreichende Strahlendosis in die Klebstoffschicht 13 eingetragen wird, aber nur eine geringe Strahlendosis den zur Siegelung vorgesehenen cPP-Film 14 negativ beeinflusst. Nach dem Austritt aus der Bestrahlungsstation 20 wird die Verpackungsfolie 10 auf eine dritte Wickelrolle 22 aufgewickelt.

Die Verpackungsfolie 10 mit der vollständig ausgehärteten Klebstoffschicht 13 kann unmittelbar nach dem Aufwickeln auf die Wickelrolle 22 auf einer Schneidvorrichtung in versandfertige Einheiten handelsüblicher Breite unterteilt werden.

Es versteht sich von selbst, dass bei der Verklebung der Filme oder Folien in den vorstehend beschriebenen Laminierverfahren der Klebstoff auch auf die jeweils anderen als die in den Beispielen gewählten Filme oder Folien aufgetragen werden kann.

## Patentansprüche

1. Verfahren zur Herstellung eines Verpackungsmaterials mit wenigstens zwei über wenigstens eine Klebstoffschicht (13) zu einem mehrschichtigen Laminat (10) verbundenen Filmen (14) oder Folien (12), wobei die Klebstoffschicht/en ausgehärtet wird/werden,
**dadurch gekennzeichnet, dass**
wenigstens eine Klebstoffschicht (13) aus einem Elektronenstrahl härtenden Klebstoff besteht und das Laminat (10) zum Aushärten des Klebstoffes mit Elektronen bestrahlt wird.

2. Verfahren nach Anspruch 1, **dadurch gekennzeichnet, dass** das Laminat (10) zwei Filme (14) oder Folien (12) und eine Klebstoffschicht (13) aus einem Elektronenstrahl härtenden Klebstoff aufweist.

3. Verfahren nach Anspruch 2, **dadurch gekennzeichnet, dass** das Laminat (10) die folgende Struktur aufweist: PP-Film (14) / Klebstoffschicht (13) aus einem Elektronenstrahl härtenden Klebstoff / Aluminiumfolie (12).

4. Verfahren nach Anspruch 3, **dadurch gekennzeichnet, dass** das Laminat (10) auf der Aluminiumfolie (12) zusätzlich Lackschichten (11) und/oder Bedruckungen aufweist.

5. Verfahren nach Anspruch 3, **dadurch gekennzeichnet, dass** das Laminat (10) die folgende Struktur aufweist: PP-Film (14) / Klebstoffschicht (13) aus einem Elektronenstrahl härtenden Klebstoff / Aluminiumfolie (12) / Lackschicht (11), insbesondere goldfarbige Lackschicht, wobei die Lackschicht vorzugsweise aus einem Elektronenstrahl härtenden Lack aufgebaut ist und das Laminat zum Aushärten des Lackes mit Elektronen bestrahlt wird.

6. Verfahren nach Anspruch 3, **dadurch gekennzeichnet, dass** das Laminat (10) die folgende Struktur aufweist: PP-Film (14) / Klebstoffschicht (13) aus einem Elektronenstrahl härtenden Klebstoff / Aluminiumfolie (12) / Lackschicht (11), insbesondere goldfarbige Lackschicht / Bedruckung, wobei die Lackschicht und/oder die Bedruckung vorzugsweise aus einem Elektronenstrahl härtenden Lack bzw. Druckmittel besteht und das Laminat zum Aushärten des Lackes bzw. des Druckmittels mit Elektronen bestrahlt wird.

7. Verfahren nach Anspruch 3, **dadurch gekennzeichnet, dass** das Laminat (10) die folgende Struktur aufweist: PP-Film (14) / Klebstoffschicht (13) aus einem Elektronenstrahl härtenden Klebstoff / Aluminiumfolie (12) / Lackschicht (11) / Bedruckung / Überzugslackschicht, wobei die Lackschichten und/oder die Bedruckung vorzugsweise aus einem Elektronenstrahl härtenden Lack bzw. Druckmittel bestehen und das Laminat zum Aushärten des Lackes bzw. des Druckmittels mit Elektronen bestrahlt wird.

8. Verfahren nach einem der Ansprüche 3 bis 7, **dadurch gekennzeichnet, dass** der PP-Film (14) ein cast PP-Film ist.

9. Verfahren nach einem der Ansprüche 1 bis 8, **dadurch gekennzeichnet, dass** die Klebstoffschicht (13) aus einem Elektronenstrahl härtenden Klebstoff aus einem Klebstoff auf Acrylatbasis besteht.

10. Tiefgezogener und sterilisierbarer Verpackungsbehälter zur Verpackung von Nahrungsmitteln für Mensch und Tier, aus einem Laminat (10) hergestellt mit dem Verfahren nach einem der Ansprüche 1 bis 9.

11. Tiefgezogener Verpackungsbehälter als Portionenpackung für Speisen, Packung für elektronische Komponenten und Batteriepackungen, aus einem Laminat (10) hergestellt mit dem Verfahren nach einem der Ansprüche 1 bis 9.
